# EUROPEAN PATENT SPECIFICATION

(11) **EP 3 437 527 B1**
(45) Date of publication and mention of the grant of the patent: **27.05.2020**
(21) Application number: 18185213.8
(22) Date of filing: 24.07.2018
(51) Int. Cl.: A47J 31/36

(54) **APPARATUS FOR STORING AND SUPPLYING CAPSULES TO MACHINES FOR PREPARING INFUSED BEVERAGES**
VORRICHTUNG ZUM AUFBEWAHREN UND ZUR AUSGABE VON KAPSELN AN GETRÄNKEAUTOMATEN
APPAREIL POUR LE STOCKAGE ET L'APPROVISIONNEMENT DE CAPSULES POUR UNE MACHINE DE PRÉPARATION DE BOISSON INFUSÉES

(30) Priority: 31.07.2017 IT 201700087636
(43) Date of publication of application: 06.02.2019
(73) Proprietor: Capitani S.r.l., 22043 Solbiate con Cagno (CO) (IT)
(72) Inventor: CAPITANI, Emilio Alfredo, 6900 Lugano (CH)
(74) Representative: Fabiano, Piero

(56) References cited:
- EP-A1- 2 617 333
- WO-A1-2004/045350
- WO-A1-2013/144761
- WO-A1-2016/147041

## Description

### Field of the Invention

The present invention refers to an apparatus for storing and supplying capsules to machines for preparing infused beverages. In particular, the present invention concerns an apparatus for the automated storage and supply of capsules to the infusion assembly of machines for preparing infused beverages.

### Known Art

As known, machines for preparing infused beverages from an infusion capsule containing an aromatic essence became popular in the last years.

The capsule, containing the aromatic essence, is put or moved inside the infusion chamber of the machine, so that the aromatic essence is extracted by introducing pressurized hot water into the infusion capsule.

The afore described typology of machines is now taking off also in business environment, such as offices and companies, and in catering, in particular in fast food chains.

However, the Applicant noticed that nowadays in machines for preparing infused beverages, generally the infusion capsules are supplied to the machines and, particularly, to their infusion assembly manually.

In other terms, the person preparing the beverage takes a capsule manually and put it into the infusion assembly.

Moreover, the Applicant noticed that, in the domestic environment, small containers for storing capsules are provided, such containers usually have a function more aesthetic than functional.

In other words, such containers are designed only for collecting the capsules in an aesthetically pleasing way, but they do not supply in any way the capsules to the infusion assembly of the machine.

In bars/restaurants and fast foods, due to the necessary size and overall dimensions, no containers for the storage of capsule are provided, which are typically kept inside the packing box coming from the producing factories. WO2004/045350 discloses a known apparatus for storing and supplying the capsules to the machine for preparing the infused beverages.

Therefore the Applicant found the need of providing an apparatus for storing and supplying the capsules to machines for preparing the infused beverages, which is able to solve the afore mentioned problems.

In particular, the Applicant tackled the problem of implementing an apparatus for storing and supplying the capsules to the machine for preparing the infused beverages, and in particular to its infusion chamber in an automated way.

Moreover, the Applicant tackled the problem of implementing an apparatus for storing and supplying the capsules to the machine for preparing the infused beverages, which is compact and directly connected, or able to be connected, to the machine for preparing infused beverages.

Furthermore, the Applicant tackled the problem of supplying, in an automated way, the capsule to the infusion assembly with its own longitudinal axis substantially already arranged substantially longitudinal.

### Summary of the Invention

Therefore, the invention in its first aspect relates to an apparatus for storing and supplying capsules to machines for preparing infused beverages, comprising:
- a storage chamber which develops around a longitudinal axis and is shaped to contain said capsules in a random arrangement;
- a discharge conveyor placed downstream of the storage chamber and in communication with an infusion assembly of a machine for preparing an infused beverage;
- a movement device to move the capsules inside said storage chamber, which is provided with a motor, a rotating shaft driven to rotate by the motor and a rotating member designed to move the capsules inside the storage chamber;
- an orientation device adapted to direct the longitudinal axis of the capsules towards a substantially horizontal position, and
- a screen-like element arranged downstream of the orientation device, comprising a first opening shaped to allow the passage of a capsule to the discharge conveyor only if the longitudinal axis of the capsule is arranged along a substantially horizontal direction;
- said discharge conveyor being configured so as to not modify the orientation of the longitudinal axis of the capsule exiting from said screen-like element to said infusion assembly of the machine;
- a separating element arranged inside the storage chamber so that to longitudinally divide the inner volume of the storage chamber.

The present invention, in the above mentioned aspect, can have at least one of the preferred characteristics hereinafter described.

Preferably, the screen-like element is in communication with the discharge conveyor. Advantageously, the distributing elements comprises a plurality of distributing elements arranged so as to define a plurality of open cavities, each of them being able to accommodate a capsule only if the longitudinal axis of the capsule is substantially horizontal.

Conveniently, along a direction parallel or coincident with the longitudinal axis, the screen-like element is arranged directly upstream of the discharge conveyor so that the capsule exiting from the first opening enters the discharge conveyor.

Preferably, the rotating member comprises at least one rotating arm placed inside the storage chamber and driven to rotate by the rotating shaft.

Advantageously, the motor is at least partially arranged outside of the storage chamber. Preferably, along a direction parallel or coincident with the longitudinal axis, the orientation device is arranged downstream of the rotating member and upstream of the screen-like element.

Advantageously, the storage chamber comprises an upper portion and a lower portion which are removably coupled.

Preferably, the apparatus for storing and supplying capsules comprises a diverging element which diverges along the longitudinal direction, is arranged upstream of the orientation device so that the capsules are conveyed to the cavities of the orientation device.

Conveniently, the diverging element is arranged downstream of the movement member and comprises at least two radial arms to move the capsules.

Advantageously, the storage chamber is hermetically sealed and the apparatus comprises a device to make vacuum inside the storage chamber.

Preferably, the apparatus further comprises a clamping device switchable between a locked mode, in which the first opening is closed so that the capsule cannot pass to the discharge conveyor, and an unlocked mode, in which the passage of the capsule to the discharge conveyor is allowed.

Advantageously, the plurality of open cavities is defined, at least partially, by plugs that can be removably inserted in the orientation device.

Further characteristics and advantages of the invention will become more apparent from the detailed description of some preferred, but not exclusive, embodiments of an apparatus for storing and supplying capsules to machine for preparing infused beverages, particularly to the infusion assembly of machines for preparing infused beverages according to the present invention.

### Brief description of the drawings

Such description will be set forth herein with reference to the attached drawings provided for illustration purposes only and without limitation, in which:
- figure 1 shows a schematic sectional view of an apparatus for storing and supplying capsules to a machine for preparing infused beverages according to the present invention;
- figure 2 is an exploded schematic view of the storing and supplying apparatus of figure 1;
- figure 3 is a schematic top view of the orientation device of the apparatus of figure 1;
- figure 4 is a schematic top view of the screen-like element of the apparatus of figure 1; and
- figure 5 is a schematic top view of the rotating member and the separating element of the apparatus of figure 1.

### Detailed Description of Embodiments of the Invention

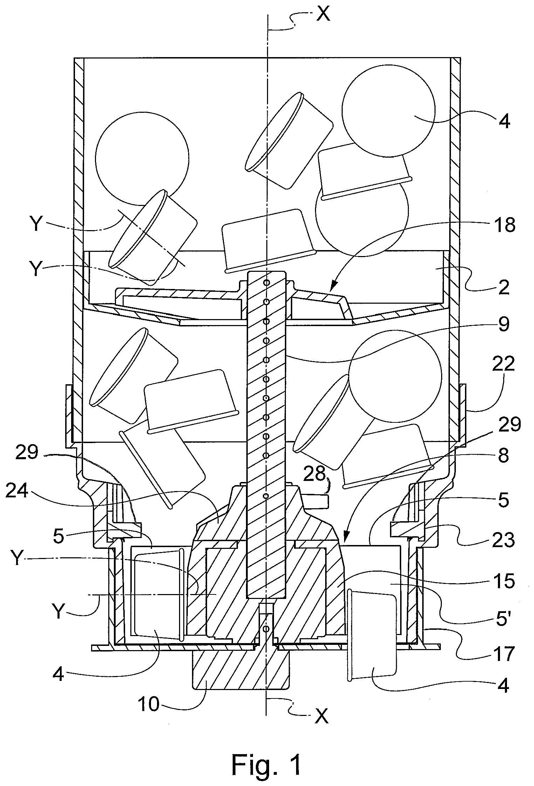

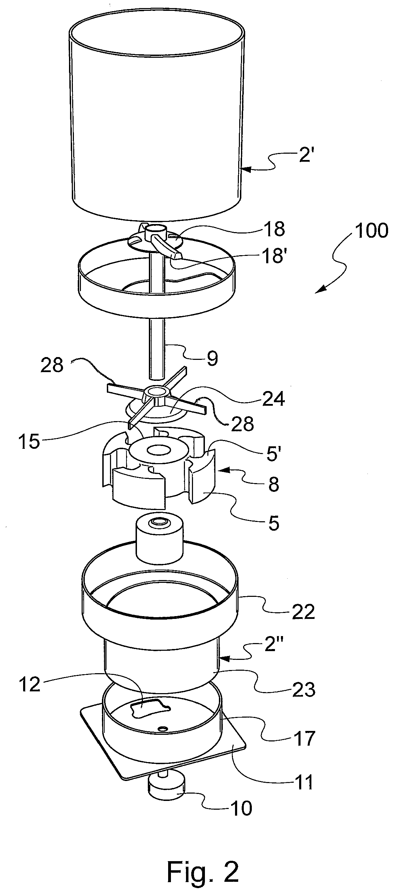

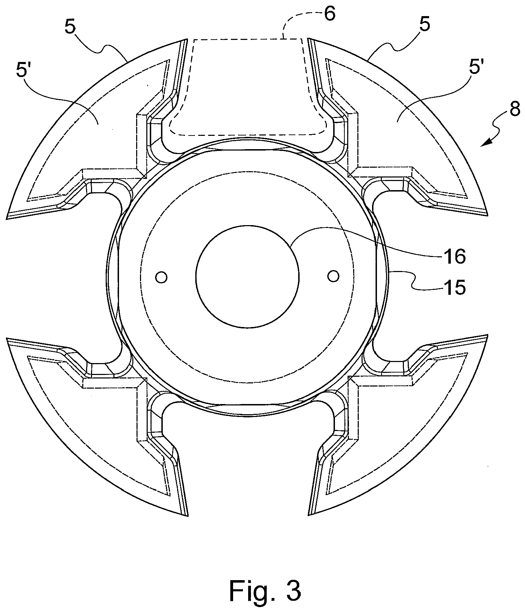

Referring to figures 1-5, an apparatus for storing and supplying the capsules 4 to machines for preparing infused beverages, in particular for storing and supplying the capsules 4 to the infusion assembly of a machine for preparing infused beverages, according to the present invention, is denoted by the numerical reference 100.

The capsules 4 are preferably disposable capsules for preparing beverages, coffees, infused beverages.

Each capsule 4, containing an aromatic essence, is put or moved inside the infusion chamber or assembly of the machine, so that the aromatic essence is extracted by introducing pressurized hot water into the capsule 4. The capsules 4 typically have a lid, generally being a film or sealing film, and a bowl-like body provided with a bottom wall, a substantially cylindrical or truncated-pyramid shaped side wall, and an upper opening that is arranged at the opposite end of the side wall, with respect to the bottom wall. The lid is arranged to seal the upper opening.

The supplying apparatus 100, as shown in the figures, comprises a storage chamber 2 shaped to house a predetermined number of capsules 4 for preparing infused beverages. In the storage chamber 2, the arrangement taken by the capsules 4 is random, as shown in figure 1. The storage chamber 2, in the embodiment shown in the figures, has a cylindrical pattern along a central longitudinal axis X-X and is provided, at the upper end, with a removable lid (not shown in the figures), to allow the insertion of the capsules 4, and at its lower end, with a screen-like element 11.

The storage chamber 2 is hermetically closed by apposite seals placed, for example, between the removable lid and the upper end of the same storage chamber.

Preferably, the storage chamber 2, as in the embodiment shown in figure 1, can be composed of two portions, respectively an upper portion 2' and a lower portion 2".

In this case, to maintain the tightness of the storage chamber 2, at least one gasket between the upper portion 2' and a lower portion 2" can be provided. In the embodiment shown in Figure 1, the upper portion 2' of the storage chamber 2 has a substantially cylindrical body extending along the central longitudinal axis X-X. At the upper end of the upper portion 2' of the storage chamber 2, the removable lid (not shown in the figure) is provided and, at its lower end, the upper portion 2' is coupled to the lower portion 2" by apposite coupling means. The lower end 2" is in turn composed of two cylindrical elements 22, 23 arranged consecutively one to another along the longitudinal direction.

The upper cylindrical element 22 has a cross section, i.e. a section arranged along a plane orthogonal to the central longitudinal axis X-X, greater than the cross section of the lower cylindrical element 23.

The reduction of cross section of the lower cylindrical element 23 allows a narrower access, in numeric terms, of the capsules 4 to an orientation device 8 placed, as better described in the following, upstream of the lower cylinder 23.

The upper cylindrical element 22 is coupled at its upper end with the lower end of the upper portion 2' of the storage chamber 2.

For this reason, the cross section of the upper portion 2', at its lower end, is such to allow the upper portion 2' to be at least partially inserted into the lower portion 2", so that the side walls of the upper 2' and lower 2" portions overlap for a short length along the longitudinal direction.

Coupling screws with respective through bolts in both the side walls of the upper 2' and lower 2" portions, at their overlapped length, allows the upper 2' and lower 2" portions to be reciprocally and removably fastened.

According to an embodiment not shown, the storage chamber 2 is connected to a source to make vacuum inside the same chamber.

By making vacuum inside the storage chamber 2, the coffee aroma of the capsules 4 contained therein is preserved.

In order to aid the capsules 4 contained inside the storage chamber 2 to be conveyed downwards, the apparatus 100 further comprises movement means preferably consisting of a rotating member 18 mounted on a shaft 9 driven by a motor 10.

The rotating member 18, in the embodiment shown in the figures, consists of a rotating member 18' extending, preferably orthogonally, from the shaft 9 to almost reach the inner surface of the storage chamber 2. The rotating shaft 18', when driven by the electric motor 10, rotates integrally with the shaft 9.

The action of the movement means aids the emptying of the storage chamber 2 so that the capsules 4, which first accessed the camera 2, are the first to be conveyed downwards.

The movement means can be, for example, vibratory, translatory, rotary, reciprocating movements, or any combination thereof.

The motor 10 is preferably an electric motor that, in the embodiment shown in the figures, is at least partially positioned outside of the storage chamber 2.

To avoid the weight of all the capsules 4 weighing down on the bottom of the storage chamber 2, the latter is provided with a separating element 26 arranged inside the storage chamber 2 so that to longitudinally divide the inner volume of the storage chamber 2.

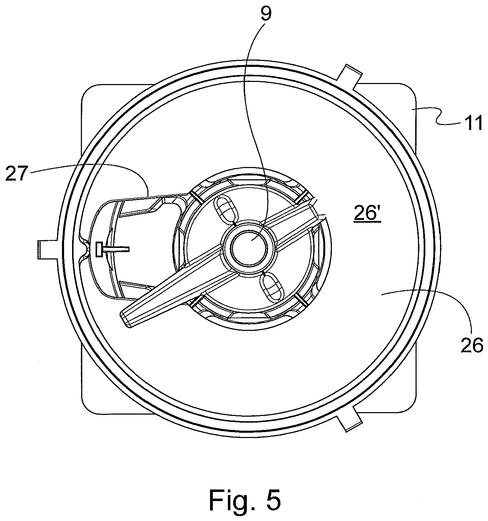

In the embodiment shown in the figures and, in particular, in figure 5, the separating element 26 looks like a disc-shaped plate with diameter substantially coincident with the inner one of the storage chamber 2.

The separating element 26 has a through opening 27 for the rotating shaft 9 and to allow the capsules 4 to pass downwards.

For this reason, the through opening 27 has a dimension greater than that of at least one section of the capsule 4 and smaller than 50% of the cross section of the storage chamber 2, preferably smaller than 40% of the cross section of the storage chamber 2. The through opening 27 extends from the rotating shaft 9 up to almost reach the side inner surface of the storage chamber 2.

On the upper surface 26' of the separating element 23, the rotating arm 18' runs angularly and moves the capsules 4 closest to the upper surface 26' towards the through opening 27.

Next to the lower end of the lower portion 2" of the storage chamber 2, then under the separating element 26, an orientation device 8 is placed and allows the capsules 4 to be arranged in such a position that their longitudinal axis Y-Y is substantially horizontal. According to a direction parallel or coincident with the central longitudinal axis X-X, the orientation device 8 is arranged downstream of the rotating member 18 and upstream of a screen-like element 11, better described in the following.

The orientation device 8 is advantageously provided with distributing elements 5 that, due to their arrangement, define a plurality of open cavities 6, each able to house a capsule 4.

The cavities 6 are sized and shaped so that the capsules 4 can enter them only with a single orientation, and in particular with that allowing their longitudinal axis Y-Y to be arranged in a substantially horizontal position. In the embodiment shown in figure 1, the distributing elements 5 consist of a plurality of partitions 5' angularly spaced so as to define, together with a central cylindrical sleeve 15 and between two following partitions 5' along the circumferential direction, a cavity 6 to house a capsule 4. The cavities 6, in the example of figure 1, are obtained by arranging four partitions 5' along radial directions so as to define annular sections the capsules 4 can access only when the latter are arranged with their upper base 7 facing the longitudinal axis X-X of the supplier 1. The upper base 7 of the capsule 4 is the one usually having the greatest section next to which the annular edge of the capsule, if any, is placed.

The number of partitions 5' and, consequently, of cavities 6 could be greater or smaller without departing from the protection scope of the present invention.

The central cylindrical sleeve 15 comprises in turn an engaging seat 16 for the rotating shaft 9.

The central cylindrical sleeve 15 turns and is driven to rotate too by the central shaft 9.

The cavities 6, in the embodiment shown in the figures, are directly embodied by the partitions 5' and the central cylindrical sleeve 15, but they could be embodied by convenient removable plugs that can be removably inserted and constrained to the orientation device 8.

According to this embodiment, the removable plugs comprise the cavities 6 and can be fastened to the central cylindrical sleeve 15 and the partitions 5', so that the replacement of the plugs can change the sizes and shapes of the cavities 6 based on the type of capsule 4 in the apparatus.

In order to aid the capsules 4 to be conveyed towards the orientation device 8, and in particular towards the cavities 6, the apparatus 100 further comprises a diverging element 24 that diverges along the longitudinal direction.

The diverging element 24 comprises a central seat 25 to engage the rotating shaft 9 passing therethrough.

The diverging shaft 24 aids the capsule 4 to be moved from more central positions towards the cavities 6.

In the embodiment shown in the figures, the diverging element 24 has four movement arms 28 that extend radially outwards.

The four movement arms 28 are preferably made of flexible material.

The four movement arms 28, in the embodiment shown in the figures, are angularly spaced by 90°.

Each movement arm 28 extends radially for at least 1/4 of the radius of the storage chamber 2, i.e. the minimum distance between the longitudinal axis X-X and the inner surface of the side wall of the storage chamber 2.

Preferably, each movement arm 28 extends radially for at most 90% of the radius of the storage chamber 2.

The movement arms 28, rotating integrally with the rotating shaft, moves the capsules 4 and aids the latter to descend downwards.

Still in order to aid the movement and the descent of the capsules 4, movement counter-arms 29 can be provided in the storage chamber 2.

In the embodiment shown in figure 1, there are four movement counter-arms 29 angularly spaced by about 90°.

Each movement counter-arm 29 extends radially and inwards, from the inner side wall of the storage chamber 2, in particular from the inner side wall of the lower portion 2" of the storage chamber.

Each movement counter-arm 29 has an extent below that of the movement arms 28. The movement counter-arms 29 are made of a flexible material, preferably the same material of the movement arms 28.

The movement counter-arms 29 and the movement arms 28 are preferably arranged on the same plane.

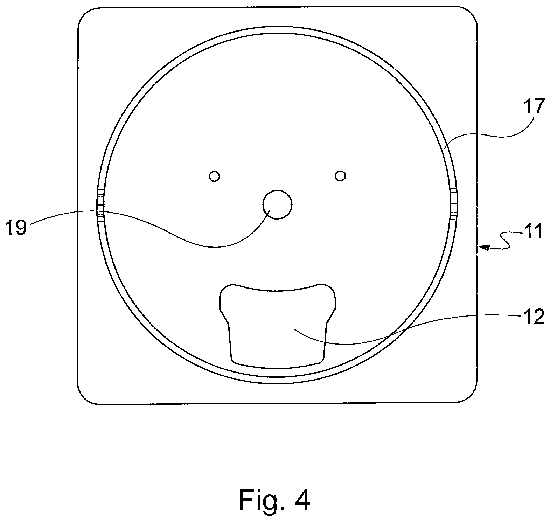

Below the orientation device 8 and the central sleeve 15, there is a screen-like element 11 better shown in figure 4. The screen-like element 11 is like a plate and is fixed and provided with at least one first opening 12 reproducing the peripheral shape of at least one section of the capsules 4. This way, due to the gravity force and the agitation generated by the movement means and the orientation device 8, the capsules 4 leave the cavities 6 of the orientation element 8 and interact with the screen-like element 11 and, in particular, with the first opening 12. Depending on the shape reproduced by the first opening 12 and on its arrangement on the screen-like element 11, the latter, with the movement of the orientation device 8, determines the spatial arrangement of the capsules 4 coming from the cavities 6.

The capsules 4 pass through the first opening 12 only if their shapes and orientations match with those reproduced by the first opening 12.

The screen-like element 11 is fixed, in other terms in the longitudinal embodiment X-X of the supplying apparatus 100.

The screen-like element 11 further has a cylindrical annular portion 17 arranged so that its longitudinal axis is concentric to the longitudinal axis X-X of the storage and supplying apparatus 100.

The cylindrical annular portion 17 allows the coupling with the lower end of the lower portion 2' of the storage chamber 2.

For this purpose, in the embodiment shown in the figures, the cylindrical annular portion 17 has such a diameter to allow the lower end of the lower portion 2' to be at least partially inserted therein.

The screen-like element 11 further has, in a central position, a seat 19 conveniently sized for the engagement of the shaft 9 or pinion coming out from the motor 10 and coupled to the shaft 9.

The screen-like element 11 can be provided with a clamping device switchable between a locked mode, in which the first opening 12 is closed so that the capsule 4 cannot pass to the discharge conveyor 3, and an unlocked mode, in which the passage of the capsule 4 to the discharge conveyor 3 is allowed.

The clamping device can comprise an electronic lock comprising a shutter to close the opening 12, which is moved by an electric actuator 12, preferably a piezoelectric actuator, driven by a control unit.

Downstream of the screen-like element 11, even if not shown in the figures, there is a discharge conveyor 3 in communication with the infusion assembly of a machine for preparing an infused beverage.

The discharge conveyor 3 is shaped so that the capsule 4 cannot substantially modify the orientation of its longitudinal axis Y-Y during the path of the screen-like element 11, up to the infusion assembly of the machine for preparing an infused beverage.

In other terms, the discharge conveyor 3 is shaped so as to not impose any orientation change on the longitudinal axis Y-Y of the capsule 4, which in this way remains substantially horizontal to the outlet from the screen-like element 11 up to the infusion assembly.

Various modifications may be made to the embodiments herein described in detail, being still within the protection scope of the invention, defined by the following claims.

## Claims

1. Apparatus (100) for storing and supplying capsules (4) to machines for preparing infused beverages, comprising:
- a storage chamber (2) which develops - around a longitudinal axis (X-X) and is shaped to contain said capsules (4) in a random arrangement;
- a discharge conveyor (3) placed downstream of said storage chamber (2) and in communication with an infusion assembly of a machine for preparing an infused beverage;
- a movement device to move the capsules (4) inside said storage chamber (2), which is provided with a motor (10), a rotating shaft (9) driven to rotate by said motor (10) and a rotating member (8) designed to move the capsules (4) inside said storage chamber (2);
- a rotatably-mounted orientation device (8) configured to direct the longitudinal axis (Y-Y) of the capsules (4) towards a substantially horizontal position,
- a screen-like element (11) arranged downstream of said orientation device (8), comprising a first opening (12) shaped to allow the passage of a capsule (4) to the discharge conveyor (3) only if the longitudinal axis (Y-Y) of the capsule (4) is arranged along a substantially horizontal direction;
**characterized in that** it further comprises:
- a separating element (26) arranged inside the storage chamber (2) so that to longitudinally divide the inner volume of the storage chamber (2);
- said discharge conveyor (3) being configured so as to not modify the orientation of the longitudinal axis of the capsule (4) exiting from said screen-like element (11) to said infusion assembly of said machine.

2. Apparatus (100) for storing and supplying capsules (4) according to claim 1, **characterized in that** said screen-like element (11) is fixed and in communication with said discharge conveyor (3).

3. Supplying apparatus (100) for storing and supplying capsules (4) according to claim 1, **characterized in that** said orientation device (8) comprises a plurality of distributing elements (5) arranged so that to define a plurality of open cavities (6), each of them being able to accommodate a capsule (4) only if the longitudinal axis (Y-Y) of said capsule (4) is substantially horizontal.

4. Supplying apparatus (100) for storing and supplying capsules (4) according to claim 1 **characterized in that**, along a direction parallel or coincident with the longitudinal axis (X-X), said screen-like element (11) is arranged directly upstream of said discharge conveyor (3) so that the capsule (4) exiting from said first opening (12) enters said discharge conveyor (3).

5. Apparatus (100) for storing and supplying capsules (4) according to claim 1, **characterized in that** it further comprises movement means consisting of a rotating member (18) comprising at least one rotating arm (18') placed inside the storage chamber (2) and driven to rotate by said rotating shaft (9).

6. Apparatus (100) for storing and supplying capsules (4) according to claim 1 **characterized in that**, along a direction parallel or coincident with the longitudinal axis (X-X), said orientation device (8) is arranged downstream of said rotating member (18) and upstream of said screen-like element (11).

7. . Aparatus (100) for storing and supplying capsules (4) according to claim 1, **characterized in that** said storage chamber comprises an upper portion (2') and a lower portion (2") which are removably coupled.

8. Apparatus (100) for storing and supplying capsules (4) according to claim 1, **characterized by** comprising a diverging element (24) which diverges along the longitudinal direction, is arranged upstream of the orientation device (8) so that the capsules (4) are conveyed to the cavities (6) and is provided with at least two movement arms (28) to move the capsules.

9. Apparatus (100) for storing and supplying capsules (4) according to claim 8, **characterized in that** said diverging element (24) is arranged downstream of said rotating member (18).

10. Apparatus (100) for storing and supplying capsules (4) according to any one of the preceding claims, **characterized in that** said storage chamber (2) is hermetically sealed and **in that** it comprises a device to create vacuum inside the storage chamber (2).

11. Apparatus (100) for storing and supplying capsules (4) according to any one of the preceding claims, **characterized by** comprising a clamping device switchable between a locked mode, in which the first opening (12) is closed so that the capsule (4) cannot pass to the discharge conveyor (3), and an unlocked mode, in which the passage of the capsule (4) to said discharge conveyor (3) is allowed.

12. Apparatus (100) for storing and supplying capsules (4) according to claim 3, **characterized in that** the plurality of open cavities (6) is defined, at least partially, by plugs that can be removably inserted in said orientation device (8).

## Patentansprüche

1. Vorrichtung (100) zum Lagern und Zuführen von Kapseln (4) zu Maschinen zum Zubereiten von infundierten Getränken, umfassend:
- eine Speicherkammer (2), die sich um eine Längsachse (X-X) entwickelt und so geformt ist, dass sie die Kapseln (4) in einer zufällige Anordnung enthält;
- einen Abgabeförderer (3), der stromabwärts der Speicherkammer (2) angeordnet ist und mit einer Infusionsanordnung einer Maschine zur Herstellung eines infundierten Getränks in Verbindung steht;
- eine Bewegungsvorrichtung zum Bewegen der Kapseln (4) innerhalb der Speicherkammer (2), die mit einem Motor (10) versehen ist, einer rotierenden Welle (9), die angetrieben wird, um von dem Motor (10) gedreht zu werden, und einem rotierenden Element (8), das dazu ausgelegt ist, die Kapseln (4) innerhalb der Speicherkammer (2) zu bewegen;
- eine drehbar montierte Orientierungsvorrichtung (8), die so konfiguriert ist, dass sie die Längsachse (Y-Y) der Kapseln (4) in Richtung einer im Wesentlichen horizontale Position zu lenken,
- ein siebartiges Element (11), das stromabwärts der Orientierungsvorrichtung (8) angeordnet ist, umfassend eine erste Öffnung (12), die so geformt ist, dass sie den Durchgang einer Kapsel (4) zum Abgabeförderer (3) nur dann zu ermöglichen, wenn die Längsachse (Y-Y) der Kapsel (4) entlang einer im Wesentlichen horizontalen Richtung angeordnet ist;
**dadurch gekennzeichnet, dass** diese zusätzlich umfasst:
- ein Trennelement (26), das innerhalb der Speicherkammer (2) angeordnet ist, so dass das Innenvolumen der Speicherkammer (2) in Längsrichtung geteilt ist;
- wobei der Abgabeförderer (3) so konfiguriert ist, dass die Ausrichtung der Längsachse der Kapsel (4), die aus dem siebartigen Element (11) austritt, zu der Infusionsanordnung der Maschine nicht verändert wird.

2. Vorrichtung (100) zum Lagern und Zuführen von Kapseln (4) nach Anspruch 1, **gekennzeichnet dadurch, dass** das siebartige Element (11) fixiert ist und mit dem Abgabeförderer (3) in Verbindung steht.

3. Zufuhrvorrichtung (100) zum Lagern und Zuführen von Kapseln (4) nach Anspruch 1, **gekennzeichnet dadurch, dass** die Orientierungsvorrichtung (8) eine Vielzahl von Verteilungselementen (5) umfasst, die so angeordnet sind, dass sie eine Vielzahl von offenen Hohlräumen (6) definieren, wobei jede von ihnen in der Lage ist, eine Kapsel (4) nur dann aufzunehmen, wenn die Längsachse (Y-Y) der Kapsel (4) im Wesentlichen horizontal ist.

4. Zufuhrvorrichtung (100) zum Lagern und Zuführen von Kapseln (4) nach Anspruch 1, **dadurch gekennzeichnet, dass** das siebartige Element (11) entlang einer Richtung parallel oder zusammenfallend mit der Längsachse (X-X) direkt stromaufwärts des Abgabeförderers (3) angeordnet ist, so dass die aus der ersten Öffnung (12) austretende Kapsel (4) in den Abgabeförderer (3) eintritt.

5. Vorrichtung (100) zum Lagern und Zuführen von Kapseln (4) nach Anspruch 1, **gekennzeichnet dadurch, dass** dieses überdies Bewegungselements umfasst, die aus einem rotierenden Element (18) besteht, umfassend mindestens einen rotierenden Arm (18'), der in der Speicherkammer (2) angeordnet ist und von der rotierenden Welle (9) angetrieben wird, um sich zu drehen.

6. Vorrichtung (100) zum Lagern und Zuführen von Kapseln (4) nach Anspruch 1, **dadurch gekennzeichnet, dass** entlang einer Richtung parallel oder zusammenfallend mit der Längsachse (X-X) die Orientierungsvorrichtung (8) stromabwärts des rotierenden Elements (18) und stromaufwärts des siebartigen Elements (11) angeordnet ist.

7. Vorrichtung (100) zum Lagern und Zuführen von Kapseln (4) nach Anspruch 1, **dadurch gekennzeichnet, dass** die Speicherkammer einen oberen Abschnitt (2') und einen unteren Abschnitt (2") umfasst, die entfernbar gekoppelt sind.

8. Vorrichtung (100) zum Lagern und Zuführen von Kapseln (4) nach Anspruch 1, **dadurch gekennzeichnet, dass** diese ein divergierendes Element (24), welches in Längsrichtung divergiert, umfasst, welches von der Orientierungsvorrichtung (8) stromaufwärts angeordnet ist, sodass die Kapseln (4) zu den Hohlräumen (6) befördert werden, und mit mindestens zwei Bewegungsarmen (28) versehen ist, um die Kapseln zu bewegen.

9. Vorrichtung (100) zum Lagern und Zuführen von Kapseln (4) nach Anspruch 8, **dadurch gekennzeichnet, dass** das divergierende Element (24) stromabwärts des Drehelements (18) angeordnet ist.

10. Vorrichtung (100) zum Lagern und Zuführen von Kapseln (4) nach einem der vorhergehenden Ansprüche, **dadurch gekennzeichnet ist, dass** die Speicherkammer (2) hermetisch abgedichtet ist und dass diese eine Vorrichtung zum Erzeugen eines Vakuums innerhalb der Speicherkammer (2) umfasst.

11. Vorrichtung (100) zum Lagern und Zuführen von Kapseln (4) nach einem der vorhergehenden Ansprüche, **dadurch gekennzeichnet, dass** diese eine Klemmvorrichtung umfasst, die zwischen einem verriegelten Modus, in dem die erste Öffnung (12) geschlossen ist, so dass die Kapsel (4) nicht zum Abgabeförderer (3) gelangen kann, und einem entriegelten Modus, in dem der Durchgang der Kapsel (4) zum Abgabeförderer (3) zulässig ist, umschaltbar ist.

12. Vorrichtung (100) zum Lagern und Zuführen von Kapseln (4) nach Anspruch 3, **dadurch gekennzeichnet, dass** die Vielzahl offener Hohlräume (6) zumindest teilweise durch Stopfen definiert ist, die entfernbar in die Orientierungsvorrichtung (8) eingeführt werden können.

## Revendications

1. Appareil (100) pour le stockage et l'approvisionnement de capsules (4) à des machines de préparation de boissons infusées, comprenant :
- une chambre de stockage (2) laquelle se développe - autour d'un axe longitudinal (X-X) et est formée pour contenir lesdites capsules (4) dans un agencement aléatoire ;
- un convoyeur d'évacuation (3) placé en aval de ladite chambre de stockage (2) et en communication avec un ensemble d'infusion d'une machine de préparation d'une boisson infusée ;
- un dispositif de déplacement pour déplacer les capsules (4) à l'intérieur de ladite chambre de stockage (2), lequel est doté d'un moteur (10), d'un arbre rotatif (9) entraîné pour tourner par ledit moteur (10) et un élément rotatif (8) conçu pour déplacer les capsules (4) à l'intérieur de ladite chambre de stockage (2) ;
- un dispositif d'orientation monté en rotation (8) configuré pour diriger l'axe longitudinal (Y-Y) des capsules (4) vers une position sensiblement horizontale,
- un élément de type écran (11) agencé en aval dudit dispositif d'orientation (8), comprenant une première ouverture (12) formée pour permettre le passage d'une capsule (4) au convoyeur d'évacuation (3) seulement si l'axe longitudinal (Y-Y) de la capsule (4) est agencé le long d'une direction sensiblement horizontale ;
**caractérisé en ce qu'**il comprend en outre :
- un élément de séparation (26) agencé à l'intérieur de la chambre de stockage (2) de sorte à diviser longitudinalement le volume intérieur de la chambre de stockage (2) ;
- ledit convoyeur d'évacuation (3) étant configuré de façon à ne pas modifier l'orientation de l'axe longitudinal de la capsule (4) sortant dudit élément de type écran (11) vers ledit ensemble d'infusion de ladite machine.

2. Appareil (100) pour le stockage et l'approvisionnement de capsules (4) selon la revendication 1, **caractérisé en ce que** ledit élément de type écran (11) est fixé et en communication avec ledit convoyeur d'évacuation (3).

3. Appareil (100) d'approvisionnement pour le stockage et l'approvisionnement de capsules (4) selon la revendication 1, **caractérisé en ce que** ledit dispositif d'orientation (8) comprend une pluralité d'éléments de distribution (5) agencés de sorte à définir une pluralité de cavités ouvertes (6), chacune d'elles étant capable de loger une capsule (4) seulement si l'axe longitudinal (Y-Y) de ladite capsule (4) est sensiblement horizontal.

4. Appareil (100) d'approvisionnement pour le stockage et l'approvisionnement de capsules (4) selon la revendication 1 **caractérisé en ce que**, le long d'une direction parallèle ou coïncidente avec l'axe longitudinal (X-X), ledit élément de type écran (11) est agencé directement en amont dudit convoyeur d'évacuation (3) de sorte que la capsule (4) sortant de ladite première ouverture (12) entre dans ledit convoyeur d'évacuation (3).

5. Appareil (100) pour le stockage et l'approvisionnement de capsules (4) selon la revendication 1, **caractérisé en ce qu'**il comprend en outre des moyens de déplacement constitués d'un élément rotatif (18) comprenant au moins un bras rotatif (18') placé à l'intérieur de la chambre de stockage (2) et entraîné pour tourner par ledit arbre rotatif (9).

6. Appareil (100) pour le stockage et l'approvisionnement de capsules (4) selon la revendication 1 **caractérisé en ce que**, le long d'une direction parallèle ou coïncidente avec l'axe longitudinal (X-X), ledit dispositif d'orientation (8) est agencé en aval dudit élément rotatif (18) et en amont dudit élément de type écran (11).

7. Appareil (100) pour le stockage et l'approvisionnement de capsules (4) selon la revendication 1, **caractérisé en ce que** ladite chambre de stockage comprend une portion supérieure (2') et une portion inférieure (2") lesquelles sont couplées de manière amovible.

8. Appareil (100) pour le stockage et l'approvisionnement de capsules (4) selon la revendication 1, **caractérisé en ce qu'**il comprend un élément divergent (24) lequel diverge le long de la direction longitudinale, est agencé en amont du dispositif d'orientation (8) de sorte que les capsules (4) sont transportées vers les cavités (6) et est doté d'au moins deux bras de déplacement (28) pour déplacer les capsules.

9. Appareil (100) pour le stockage et l'approvisionnement de capsules (4) selon la revendication 8, **caractérisé en ce que** ledit élément divergent (24) est agencé en aval dudit élément rotatif (18).

10. Appareil (100) pour le stockage et l'approvisionnement de capsules (4) selon l'une quelconque des revendications précédentes, **caractérisé en ce que** ladite chambre de stockage (2) est scellée hermétiquement et **en ce qu'**il comprend un dispositif pour créer un vide à l'intérieur de la chambre de stockage (2).

11. Appareil (100) pour le stockage et l'approvisionnement de capsules (4) selon l'une quelconque des revendications précédentes, **caractérisé en ce qu'**il comprend un dispositif de serrage commutable entre un mode verrouillé, dans lequel la première ouverture (12) est fermée de sorte que la capsule (4) ne peut pas passer au convoyeur d'évacuation (3), et un mode déverrouillé, dans lequel le passage de la capsule (4) audit convoyeur d'évacuation (3) est autorisé.

12. Appareil (100) pour le stockage et l'approvisionnement de capsules (4) selon la revendication 3, **caractérisé en ce que** la pluralité de cavités ouvertes (6) est définie, au moins partiellement, par des bouchons qui peuvent être insérés de manière amovible dans ledit dispositif d'orientation (8).
